# EUROPEAN PATENT APPLICATION

(11) **EP 1 835 007 A2**
(43) Date of publication of application: **19.09.2007**
(21) Application number: 07104180.0
(22) Date of filing: 14.03.2007
(51) Int. Cl.: C09K 11/06, D01F 9/127

(54) **Nanofibres from functionalised organic molecules**

(30) Priority: 14.03.2006 WO PCT/EP2006/060717
(71) Applicant: Carl von Ossietzky Universität Oldenburg, 26111 Oldenburg (DE); Syddansk Universitet, 5230 Odense M (DK)
(72) Inventor: Schiek, Manuela, 26121, Oldenburg (DE); Al-Shamery, Katharina, 26160, Bad Zwischenahn (DE); Lützen, Arne, 53340, Meckenheim (DE); Koch, Rainer, 26188, Edewecht (DE); Balzer, Frank, 12435, Berlin (DE); Rubahn, Horst-Günter, 5240, Odense NO (DK)
(74) Representative: Taruttis, Stefan Georg

(57) **Abstract**

The present invention relates to organic nanofibers that can be produced from non-symmetrical compounds according to formula I 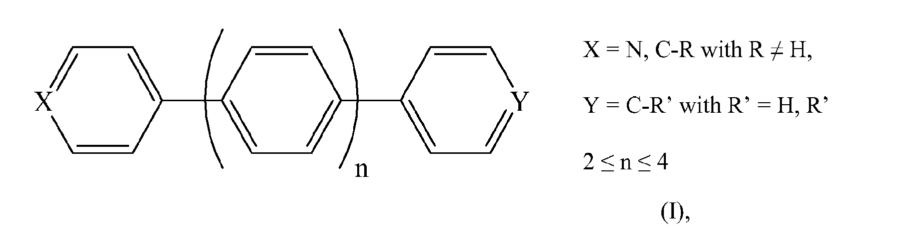 wherein X is C-R or N and Y is C-R' and n is 2 to 4, by self-organized growth on a solid substrate upon deposition from the gas phase. The resultant nanofibers have non-linear optical properties.

## Description

The present invention relates to organic nanofibers, especially to functionalized organic nanofibers comprising from non-symmetrically functionalized organic compounds and grown on mica that can be produced by self-organized growth on a substrate from the gas phase of organic compounds having an *p*-oligophenylene core of linearly arranged phenyl moieties, preferably a quaterphenylene core. The nonsymmetric functionalization or substitution is in the opposite *para*-positions of the quaterphenylene core, i.e. in 1-position and 4'"-position. Nonsymmetry of substitutions in para relates to one of the hydrogen atoms in para replaced by another substituent, to both hydrogen atoms in para replaced by different substituents other than hydrogen, and to one of the terminal phenylene units replaced by a heteroarene moiety and the other para position carrying a hydrogen atom or another functional group.

The nanofibers according to the invention show linear and non-linear optical characteristics that make them suitable for electro-optical applications. As a prominent feature, the nanofibers of the invention show frequency doubling of incident light, e.g. of light irradiated from a femtosecond pulse IR laser.

### State of the art

From Balzer et al. (Applied Physics Letters 79, 3860-3862 (2001)) generic organic nanofibers are known, consisting of *para-*hexaphenylene molecules that form needle - shaped aggregates on a muscovite mica surface by dipole-assisted epitaxial growth processes from the gas phase under high vacuum conditions. The nanofibers consisting of *para*-hexaphenylene molecules were examined by Balzer et al. (Chemical Physics Letters 368, 307-312 (2003)), *inter alia* by ultraviolet excitation and recording of their luminescence spectrum, including the non-linear optical spectra induced from a femtosecond oscillator laser.

Balzer and Rubahn (Advanced Functional Materials 15, 17-24 (2005)) investigated the morphology of the nanofibers produced from *para*-hexaphenylene molecules arranged in nanofibers. Using atomic force microscopy (AFM), a relation between substrate temperature during the deposition of the *para*-hexaphenylene molecules in vacuum and the reduction of the number of nanofibers as well as an increase in their length is shown. Further, a relationship between the substrate surface energy and the general shape of the nanofibers was found when the support material mica was treated with water beforehand, leading to the production of bent and microring-shaped nanofibers.

Further, Schiek et al. (Applied Physics Letters 86, 153107 (2005)) disclose nanofibers produced on mica by vapour deposition of *para*-quaterphenylene molecules, symmetrically functionalized with methoxy groups at both the respective carbon atoms in *para*-position of the terminally located phenyl moieties. These compounds could also be used to form nanofibers by self-organized growth, which nanofibers also fluoresce under UV-excitation. Number and length of the deposited nanofibers was dependent on the substrate temperature. The luminescence spectrum of the dimethoxy substituted *para*-quaterphenylene nanofibers indicates a shift to lower wavelengths in comparison to nanofibers consisting of *para-*hexaphenylene and to higher wavelength compared to nanofibers consisting of *para-*quaterphenylene.

EP 4 424 829 describes the synthesis ofnonsymmetrically substituted linear quaterphenylenes having a cyano substituent in one para-position of the phenylene core and a dimethylamino substituent in the opposite para-position. For the substance, β values characterizing hyperpolarizability are given. However, the optical properties of isolated molecules are not necessarily predictive for the optical properties of highly ordered aggregates of these molecules like crystalline nanoaggregates comparable to the nanofibers of this invention as it can be deduced from Meyer et al. (Angew. Chem. 117, 2536-2561 (2005)) and Gangopadhyay et al. (J. Mater. Chem. 9, 1699-1705 (1999) because noncentrosymmetric molecules can still crystallize or arrange in a centrosymmetric fashion thus strongly affecting the nonlinear optical properties, e.g. second harmonic generation (SHG) of these materials.

### Objects of the invention

In view of known organic nanofibers and known substituted quaterphenylenes, the present invention aims to provide nanofibers having alternative optical properties, e.g. different, preferably predetermined fluorescence properties under UV excitation and/or different, preferably predetermined and/or enhanced frequency doubling capabilities.

Further, the present invention aims to provide a production process for nanofibers having predetermined cross-sectional shapes, and preferably alternative or improved optical and/or electroluminescent properties.

Further, the present invention aims to provide methods for chemical synthesis of compounds, suitable for producing organic nanofibers, e.g. by vapour deposition onto a substrate.

### General description of the invention

The present invention achieves the above-mentioned objects by providing -in a first embodiment- the use of compounds for the production of nanofibers, the compounds having a core structure of 6 or of 5, preferably of 4 phenylene moieties, each linearly linked to one another in 1, 4- positions, i.e. in *para,* thus leaving two *para*-positions, with each *para-*position of the terminal phenylene moieties substituted with different substituents, one of which can be hydrogen.

According to a first embodiment of the invention, substitution of the terminally arranged *para*-positions, also termed *p*- and *p*'-, of the hexa-, penta-, and preferably quaterphenylene core structure is non-symmetrical, i.e. different substituents are positioned in both the first and second *para*-position of the core structure, e.g. the opposite *para*-positions of the linear phenylene core are derivatized with different substituents each.

In a second embodiment, the core structure contained in the compounds forming the functionalized organic nanofibers of the invention is replaced by a derivative, wherein one C-atom in para-position of a terminal phenyl ring is replaced by a nitrogen atom. Accordingly, including the first embodiment, the core structure is represented by general formula I below, wherein X may be a nitrogen atom or a substituted carbon atom and Y may be a carbon atom carrying either hydrogen or another substituent, resulting in either an oligophenylene core structure or a monoazaoligophenylene moiety, preferably a quaterphenylene or a monoazaquaterphenylene moiety having differently substituted para-positions: 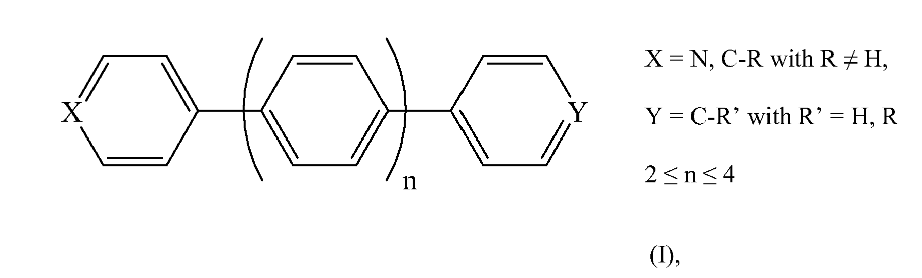 wherein X is C-R or N and Y is C-R', and
n is an integer from 2 to 4, preferably 2.

For the purposes of this invention, the term "core structure" is used as comprising the variations of both X being C-R and Y being C-R' and X being N and Y being C-R'.

Based on the non-linear optical properties of the nanofibers of the invention, the invention also relates to the use of the nanofibers as optical functional elements, e.g. as frequency doublers or polarizing elements, the nanofibers comprising, preferably consisting of, the non-symmetrical oligophenylene compounds.

When preparing the present invention it was assumed that the arrangement by epitaxially driven, self-assembled growth of hexaphenylene and dimethoxyquaterphenylene in the form of nanofibers was possible only due to the regular, i.e. symmetrical structures of the two known compounds, namely hexaphenylene and 1, 4"'-dimethoxy-4,1 1':4',1'' 1'''-quaterphenylene. Thus, based on these results prior to the invention, symmetry was regarded as a prerequisite for the formation of nanofibers.

The nanofibers according to the invention were generated from a variety of non-symmetrically substituted compounds according to formula I, which nanofibers have strong linear and non-linear optical properties. The compounds constituting the nanofibers are mono-or disubstituted in one or both *para*-positions with groups or atoms other than hydrogen, independently having a strong electronic effect and/or forming an angular bond and/or adding bulk, each, with respect to the core structure.

In accordance with Meyer (supra), it was found that the nanofibers according to the invention have optical properties, e.g. non-linear optical properties greatly differing from those of the constituent compounds, e.g. significantly differing from the powder or solution of the constituent compound.

Further, it was found that the optical properties of nanofibers constituted of the non-symmetrically substituted quaterphenylenes according to the invention to a large extent differ from the optical properties measured or calculated for these quaterphenylenes.

Characteristically, it was found that β-values calculated as a measure for hyperpolarizability of individual compounds were not necessarily predictive for the nonlinear optical properties, e. g. the intensity of an SHG signal observed for the nanofibers obtained by vacuum deposition of the compounds onto mica. Accordingly, the substance properties did not indicate the properties of the nanofibers according to the invention.

In the embodiments of the invention, the substituents to the core structure are non-symmetrical, with a first substituent linked to X or X being a N-atom and a H-atom or a different substituent linked to a C-atom (Y), providing differing electronic effects onto the core structure (donor-acceptor-substitution), e.g. different intensities in the electron pushing effects, e.g. in the +I- and/or in the +M-effect or different intensities in the electron pulling effects, e.g. in the -I- and/or in the -M-effect, or the first substituent providing an electron pushing effect and the second substituent an electron pulling effect, or vice versa.

It is found that organic nanofibers comprising compounds of the invention, especially those having a non-symmetrically substituted core structure, reveal highly increased second order susceptibility, therefore giving rise to e.g. greatly enhanced second harmonic generation. Accordingly, the introduction of non-symmetrical substituents having electron pushing and/or electron pulling character significantly can increase the non-linear optical properties, e.g. the hyperpolarizability of nanofibers produced of these compounds.

In specific embodiments, the present invention provides nanofibers comprising molecules having non-symmetrically substituted core structures, which nanofibers are not fluorescing under excitation, and which are therefore suitable as optical barriers in semiconductor devices, e.g. as optical grids or photon based gap materials. Accordingly, semiconductor devices can be provided comprising both nanofibers conducting irradiation of a specific wavelength and nanofibers not conducting these wavelengths, wherein the aforementioned varieties of nanofibers differ in their compositions, e.g. as a mixture of different non-symmetrically substituted quaterphenylenes, or in the specific substituents to the core structure.

Although the precise morphology of these nanofibers is not predictable from the molecular structure of the oligophenylene building block in advance of the deposition experiment, it is a further advantage that the compounds according to the present invention will form nanofibers in a defined and repeatable manner by deposition from the vapour phase onto a substrate surface under individually controlled conditions. In the controlled deposition process, nanofibers are generated that have a predetermined morphology dependent on deposition rate, temperature, substrate, and substituent(s) to the core as well as dependent on the core structure's content of one or two nitrogen atoms in its para-positions - in some cases even different types of nanoaggregates can be obtained from the same compound employing different growth conditions. Especially the cross-section of the nanofibers was found to be strongly dependant on the nature of the substituents on the *p*-quaterphenylenes.

As a specific advantage, some nanofibers generated from compounds according to the present invention emit polarized light when irradiated from a non-polarized excitation source, e.g. non-polarized UV or, alternatively, by injection of recombining electrons and holes. As in the case of excitation by non-polarized UV, injection of electrons and holes leads to the emission of polarized light, i.e. polarized electroluminescence.

Apart from using the fluorescent properties of nanofibers comprising the compounds according to the present invention, e.g. utilizing non-polarized UV light for excitation, another use of organic nanofibers according to the invention comprising functionalized, e.g. substituted core structures is for electro optic devices, e.g. in OFETs and OLEDs, e.g. forming the emitter layer that can be stimulated by injection of electrons and holes.

Functionalized nanofibers can be generated by vacuum deposition from a variety of compounds used according to the invention for the production of nanofibers by vacuum-deposition onto mica, the compounds being mono-substituted in one of the *para*-positions, preferably disubstituted in both *para*-positions with groups, the groups independently having a strong electronic effect and/or forming an angular bond and/or adding bulk, each, with respect to the core structure.

### Detailed description of the invention

In detail, the present invention provides nanofibers comprising a nonsymmetrically core structure according to general formula I, wherein the substituents are selected from the group comprising:
Alkoxy, especially methoxy and ethoxy, chloro, amino, dialkylamino, especially dimethylamino, diethyl amino, methyl-ethyl amino, hydroxy, pyrrole, cyano, nitro, carboxylic acid, carboxylic alkyl ester, especially methylester or ethylester, pyridine, aldehyde, a keto group, especially methyl-keto or ethyl-keto, fluoro, alkylether, especially methylether or ethylether, thio, thiol, thioalkyl, specially thiomethyl and thioethyl, and/or alkyl. As an exception from symmetrically substituted tetra-phenylene compounds, 4, 4"'-dimethoxy tetra-phenylene can be disclaimed from the compounds according to the invention.

In the case of substituents being selected from aromatic groups, e.g. from mono- and di- or poly-(hetero-)cycles, the total number of aromatic rings in the molecule, i.e. including substituent(s) and the poly-phenylene core, preferably does not exceed 6, more preferably 5 or 4 aromatic rings.

In the following description, reference is made to the accompanying figures, wherein
- Figure 1 depicts a reaction scheme for synthesis of nonsymmetrically substituted compounds of the invention,

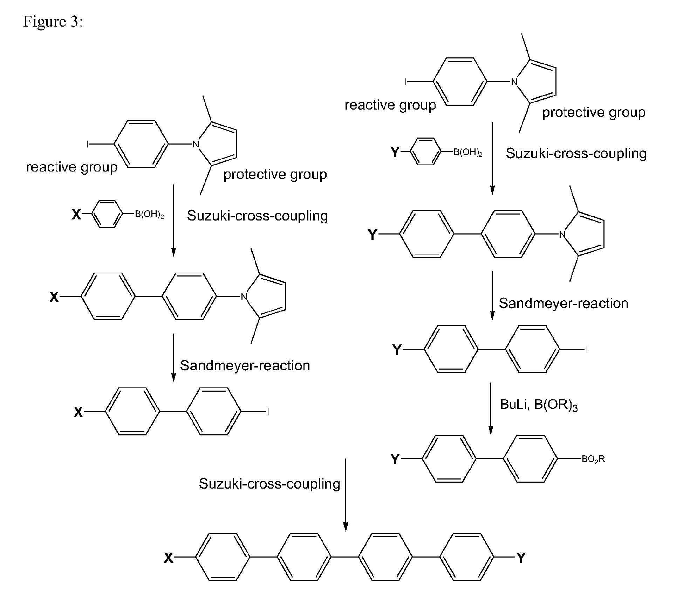

- Figures 2 and 3 depict alternative reaction schemes to Figure 2,
- Figure 4 shows a plot of β-values calculated for non-symmetrical quaterphenylenes and of measurement results of hyperpolarizability for nanofibers of the invention,
- Figure 5 shows spectra of measurements of SHG intensities for nanofibers of 1-amino-4"'-methoxy-4,1':4',1":4",1"'-quaterphenylene (MOP4NH₂) andnanofibers of 1-chloro-4"'-methoxy-4,1':4',1":4",1"'-quaterphenylene (MOP4Cl) according to the invention, and for comparison of hexaphenylene (p6P), and

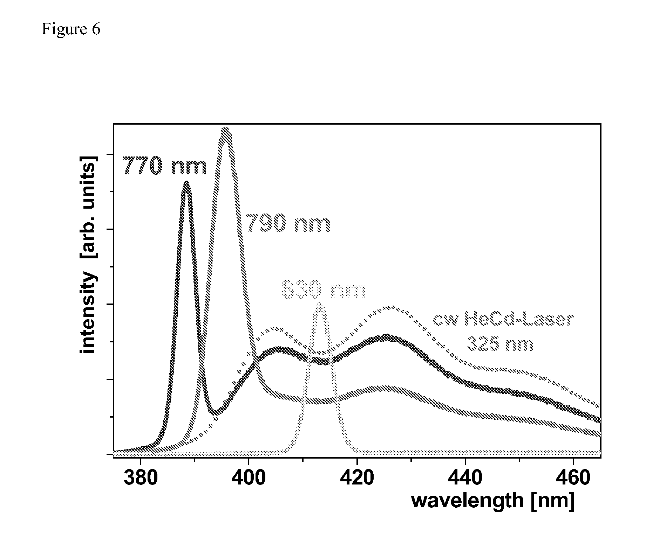

- Figure 6 shows spectra of measurements of SHG intensities for nanofibers of 1-chloro-4"'-methoxy-4,1':4',1":4",1"'-quaterphenylene upon excitation with femtosecond NIR laser pulses of different wavelengths, and the fluorescence spectrum after cw UV excitation (dotted line).

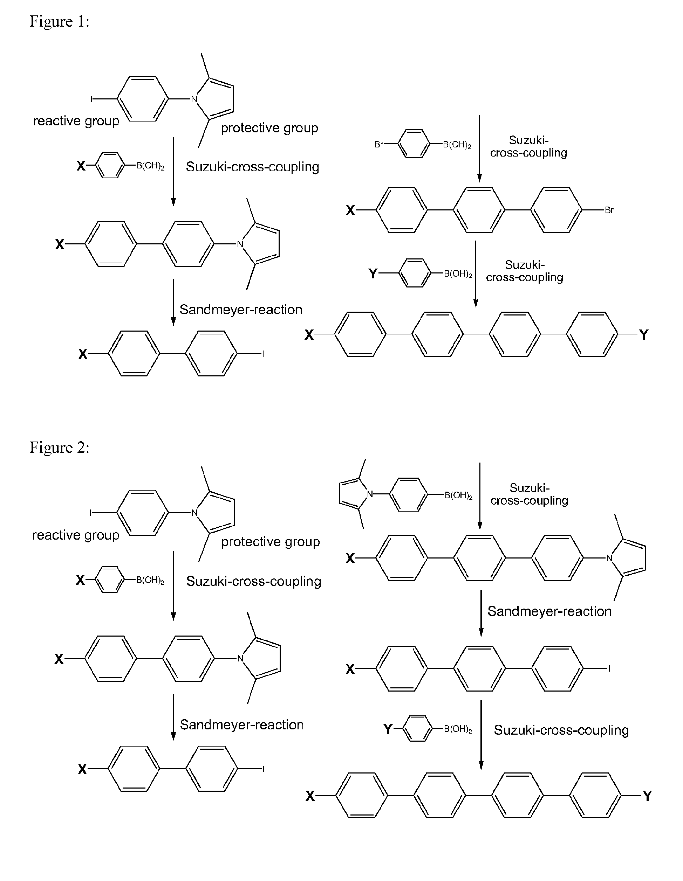

For the synthesis ofnonsymmetrically substituted cores according to the present invention, e.g. oligophenylenes, a general route of synthesis is shown in Figure 1 that starts from a 1,4-disubstituted phenyl group, one substituent being a reactive group, e.g. a halogen atom, the other substituent being a protective group, e.g. 2, 5-dimethyl pyrrole. The Suzuki cross-coupling can be performed with a 1,4- disubstituted phenyl, carrying a first desired substituent and, in *para-*position, a boronic acid derivative. Following the Suzuki cross-coupling reaction, a protecting group operation and a subsequent Sandmeyer reaction are performed, replacing the protective group by a halogen atom. Now, the intermediate product has a biphenyl core, disubstituted in its terminal *para*-positions by a first desired substituent (p) and one reactive halogen atom (p'), respectively. A subsequent Suzuki cross-coupling reaction leads to a terphenylene core, disubstituted in both terminal *para*-positions (*p*, *p'*), namely by the first desired substituent and bromine, respectively. A third Suzuki cross-coupling reaction, now adding a 1,4- disubstituted phenyl, carrying as one substituent the second desired terminal substituent of the final product, and a boronic acid group, leads to a quaterphenylene nonsymmetrically functionalized with a first substituent and a second substituent, respectively, according to the present invention. As a catalyst for the Suzuki cross-coupling reaction, tetrakis(triphenylphosphino)-palladium (0) can be used as for the symmetrical synthesis, whereas sodium nitrite and e.g. potassium iodide can be used for the Sandmeyer reaction under acidic conditions.

For producing the nanofibers according to the invention, the respective constituent compounds are deposited by vapour deposition in high vacuum onto a non-metallic crystal surface, preferably on one of single crystalline silicon, on one of muscovite mica, of phlogopite mica or of alkali metal halide crystal, most preferred on freshly cleaved muscovite mica. During the deposition process, the substrate temperature and the deposition rate as well as the nominal film thickness are controlled for regulating nanofiber growth. When choosing suitable deposition conditions, quasi single-crystalline nanofibers form on the surface of the substrate, having a height and width, i.e. cross-sectional dimensions, in a range of the order of optical wavelengths or smaller, e.g. below approximately 900 nm down to below 100 nm, whereas their length can reach several 100 µm. The highly ordered crystalline structure of the nanofibers is presumed to be the cause for the emittance of polarized, spatially anisotropic light upon excitation with non-polarized UV, and the observation of SHG-signals.

The precise wavelength of luminescence is dependent on the functional group or groups, respectively, substituting the core structure, and interestingly, the substituents to the core structure also determine the cross-sectional shape of the nanofibers, e.g. providing a symmetric or asymmetric cross-sectional face, e.g. rounded, rectangular, frustum-shaped or triangular.

Apart from predetermining the cross-sectional shape of nanofibers produced by the compounds being substituted symmetrically or asymmetrically in at least one of the terminal *para*-positions of the core structure according to the present invention, these compounds also produce nanofibers having a predetermined longitudinal shape deviating from the linear extension, e.g. an angular bend and even branching points, providing e.g. a Y-shaped geometry. The longitudinal shape of each nanofiber is also dependent on the symmetric or asymmetric substitution of the poly-phenylene core in both its first and second *para*-positions. It is possible to produce mixtures of the aforementioned compounds for generating nanofibers according to the present invention. When providing mixtures of compounds, each having differently substituted core structures and/or core structures differing in the atom in their X and/or Y positions, it is preferred to use mixed compounds having the same core structure, with variations of one or both substituents only, or, alternatively, using mixtures comprising compounds having differing core structures with the same respective substituents.

In general, nanofibers according to the present invention can be collected from the deposition surface by mechanical means or fluid assisted methods and transferred to any desired receiving surface, as previously described in Danish patent application 37073.

In the following, the synthesis of exemplary compounds according to the invention and their partial characterization are presented, suitable for use in generating nanofibers having specific optical properties and characteristic cross-sectional shapes and/or longitudinal shapes like bends, angles and/or branching of the longitudinal axis of a nanofiber. Although the examples refer to compounds having a poly-phenylene core, a skilled person can adapt the synthesis routes without undue experimentation to be suitable for synthesizing the nitrogen containing core structure containing compounds, i.e. compounds according to formula I having at least one nitrogen in the place of X and/or Y.

In general, compounds were deposited as synthesized or after additional sublimation onto freshly cleaved muscovite mica in a Knudsen cell type oven with a 0.5 mm diameter nozzle at a pressure of 10⁻⁴ to 10⁻⁶ Pa at the indicated temperatures, generally in a range between 300 K and 480 K.

For analysis, ¹H-NMR spectra were recorded on a Bruker DRX500 spectrometer at 500.1 MHZ at 300 K in CDCl₃. Mass spectra were obtained on a Finnigan MAT 95 spectrometer having a DEC-Station 5000 data system, ESI was performed on a Thermoquest Finnigan LCQ with an Xcalibur data system. IR spectra were recorded on a Bruker Vector 22 spectrometer, UV/VIS spectra on an Analytik Jena Specord 200 model.

### Example 1: Synthesis of nonsymmetrically monosubstituted p-quaterphenylenes having one hydrogen atom in one para-position

As examples for monosubstituted *p*-quaterphenylenes, 1-chloro-4,1':4', 1":4",1"'-quaterphenylene, 1-methoxy-4,1':4',1":4",1"'-quaterphenylene, 1-nitro-4,1':4',1":4",1"'-quaterphenylene, 1-amino-4,1':4',":4",1"'-quaterphenylene, 1-cyano-4,1':4',1":4",1"'-quaterphenylene, 1-dimethylamino-4,1':4',1":4",1"'-quaterphenylene, and 1-bromo-4,1':4',1":4",1"'-quaterphenylene were synthesized.

### Reaction No. 1:

For the synthesis of 1-chloro-4,1':4',1":4",1"'-quaterphenylene, 1.16 g (3.69 mmol) 4-chloro-4'-iodobiphenyl, 0.76 g (3.87 mmol) 4-biphenylboronic acid, 2.88 g (11.07 mmol) cesium fluoride and 127 mg (0.11 mmol) tetrakis(triphenylphosphino)palladium(0) were dissolved in 70 mL THF and refluxed for 15 h under inert gas. After cooling to room temperature, the light grey precipitate was collected by filtration and washed with THF, dichloromethane and water. Yield: 59%. EI: m/z (%) = 340.2 (M⁺, 100), UV/Vis λ=301.5 nm (dichloromethane), fluorescence (dichloromethane) λ=356 nm.

### Reaction No. 2:

For the synthesis of 1-methoxy-4,1':4',1":4",1'"-quaterphenylene, 2.0 g (6.44 mmol) 4-methoxy-4-iodobiphenyl, 1.33 g (6.77 mmol) 4-biphenylboronic acid, 5.02 g (19.3 mmol) cesium fluoride and 223 mg (0.19 mmol) tetrakis(triphenylphosphino)palladium(0) were dissolved in 120 mL THF and refluxed for 15 h under inert gas. After cooling to room temperature, the solid, yellow-brown precipitate was collected by filtration and washed with THF, dichloromethane and water. Yield: 36 %, EI (m/z (%) 336.2 (M+, 100), UV/Vis λ=265 nm (dichloromethane), fluorescence (dichloromethane) λ=384 nm.

### Reaction No. 3:

For the synthesis of 1-nitro-4,1':4',1":4",1"'-quaterphenylene, 2 g (8.06 mmol) 1-iodo-4-nitrobenzene, 1.34 g (8.06 mmol) phenyl-1,4-diboronic acid, 3.34 g (24.18 mmol) potassium carbonate and 466 mg (0.40 mmol) tetrakis(triphenylphosphino)palladium(0) were dissolved in 90 mL / 60 mL / 0.5 mL toluene / methanol / water and refluxed for 3 h under inert gas. After cooling to room temperature, another 466 mg tetrakis(triphenylphosphino)palladium(0) and 2.8 g 4-iodophenyl were added and refluxed for 36 h. The black precipitate was collected by filtration and washed with THF, dichloromethane and water. Yield: 98 %. EI (m/z (%) 351.2 (M⁺, 100), UV/V is λ=323.5 nm (dichloromethane), fluorescence (dichloromethane) λ=323.5 nm.

### Reaction No. 4:

For the synthesis of 1-amino-4,1':4',1":4",1"'-quaterphenylene, 1.5 g (6.88 mmol) 4-iodoaniline, 1.14 g (96.8 mmol) phenyl-1,4-diboronic acid, 2.85 g (20.60 mmol) potassium carbonate and 398 mg (0.34 mmol) tetrakis(triphenylphosphino)palladium(0) were dissolved in 90 mL / 60 mL / 0.5 mL toluene / methanol / water and refluxed for 3 h under inert gas.

After cooling to room temperature, another 398 mg tetrakis(triphenylphosphino)palladium(0) and 2.31 g 4-iodobiphenyl were added and refluxed for 36 h. The light green precipitate was collected by filtration and washed with toluene, methanol, dichloromethane/trifluoroacetic acid and water. Yield: 94 %. EI (m/z (%) 306.2 (C₂₄H₁₉⁺, 100), 321.2 (M⁺, 22), UV/Vis λ=311 nm (dichloromethane), fluorescence (dichloromethane) λ=386 nm.

### Reaction No. 5:

For the synthesis of 1-cyano-4,1':4',1":4",1'"-quaterphenylene, 1.5 g (6.6 mmol) 1-cyano-4-iodobenzene, 1.09 g (6.58 mmol) phenyl-1,4-diboronic acid, 2.73 g (19.7 mmol) potassium carbonate and 380 mg (0.33 mmol) tetrakis(triphenylphosphino)palladium(0) were dissolved in 90 mL / 50 mL / 0.5 mL toluene / methanol / water and refluxed for 3 h under inert gas. After cooling to room temperature, another 466 mg tetrakis(triphenylphosphino)palladium(0) and 2.21 g 4-iodobiphenyl were added and refluxed for 36 h. The precipitate was collected by filtration and washed with toluene, methanol, dichloromethane/trifluoroacetic acid and water. Yield: 65 %. EI (m/z (%) 331.1 (M+, 100), UV/Vis λ=312 nm (dichloromethane), fluorescence (dichloromethane) λ=390 nm.

### Reaction No. 6:

For the synthesis of 1-dimethylamino-4,1':4',1":4",1"'-quaterphenylene, 0.75 g (3.04 mmol) 4-iodo-*N,N*-dimethylaniline, 0.5 g (3.04 mmol) phenyl-1,4-diboronic acid, 1.26 g (9.12 mmol) potassium carbonate and 176 mg (0.15 mmol) tetrakis(triphenylphosphino)-palladium(0) were dissolved in 45 mL / 30 mL / 0.5 mL toluene / methanol / water and refluxed for 3 h under inert gas. After cooling to room temperature, another 398 mg tetrakis(triphenylphosphino)palladium(0) and 1.02 g 4-iodobiphenyl were added and refluxed for 36 h. The light brown precipitate was collected by filtration and washed with toluene, methanol, dichloromethane/trifluoroacetic acid and water. Yield: 5 %. EI (m/z (%) 349.2 (M⁺, 100), UV/Vis λ=331.5 nm (dichloromethane), fluorescence (dichloromethane) λ=448 nm.

### Reaction No. 7:

For the synthesis of 1-bromo-4,1':4',1":4",1"'-quaterphenylene, 0.75 g (2.66 mmol) 1-bromo-4-iodobenzene, 0.45 g (2.66 mmol) phenyl-1,4-diboronic acid, 1.10 g (7.98 mmol) potassium carbonate and 153 mg (0.13 mmol) tetrakis(triphenylphosphino)palladium(0) were dissolved in 45 mL / 30 mL / 0.5 mL of toluene / methanol / water and refluxed for 3 h under inert gas. After cooling to room temperature, another 153 mg tetrakis(triphenylphosphino)-palladium(0) and 0.98 g 4-iodobiphenyl were added and refluxed for 36 h. The brown precipitate was collected by filtration and washed with toluene, methanol, dichloromethane and water. Yield: 58 %. EI (m/z (%) 384.1 (M⁺, 100), UV/Vis λ=303.5 nm (dichloromethane), fluorescence (dichloromethane) λ=378 nm.

For the above synthesized compounds, the β-values were calculated for isolated molecules in the gas phase as a measure for hyperpolarizability, i.e. without consideration of effects based on the nanofiber structure. The moderate 6-31G(d) basis set was used for calculating relative trends caused by variation of substituents according to Fanti et al. (J. Mol. Struct. (THEOCHEM.) 388, 305-313 (1996)), Champagne et al. (J. Phys. Chem A 104, 4755-4763 (2000)) and Jacquemin et al. (J. Chem. Theory Comput. 1, 307-314 (2005)). For better feasibility, geometries of oligophenylenes with 2, 4, 6 and 8 aromatic rings were optimised at a density functional theory level (B3LYP) instead of e.g. the perturbation theory. For calculations, the programme package Gaussian 03, Rev. C.02 was used (Frisch et al., Gaussian Inc., Wallingford, CT, USA, 2004). For optimization of ground state geometries, Pople's basis set 6-31 G(d) as described in Hariharan et al. (Theor. Chim. Acta 28, 213-222 (1973)) and in Pietro et al. (J. Am. Chem. Soc. 104, 5039-5048 (1982)) and density functional theory (DFT) with the B3LYP functional (Becke et al., J. Chem. Phys. 98, 5648-5652 (1993), Lee et al., Phys. Rev. B, 37, 785-789 (1988)) was used. The nature of all stationary points as true minima was confirmed by calculating harmonic frequencies. Second order susceptibilities cannot be determined accurately by DFT methods as these tend to overestimate these significantly as has been observed for other π-conjugated push-pull systems (see e.g. Champagne et al. in J. Phys. Chem A 104, 4755-4763 (2000)). After extensive testing of experimental data on substituted biphenyls and terphenylenes, β was evaluated at the Hartree-Fock level of theory.

From calculations of β values for these nonsymmetrically monosubstituted quaterphenylene compounds, the following quantitative order of hyperpolarizabilities is estimated: dialkylamino > cyano > methoxy ~ chloro.

Nanofibers produced by vacuum-deposition onto freshly-cleaved mica in a Knudsen-cell oven exhibit optical properties that significantly differ from the properties of their molecular building compounds. For the following measurements compiled in Table 1, nanofibers were generated of the substance indicated without any admixture, as is generally the case in this disclosure.

**Table 1: Optical properties of nanofibers from nonsymmetrically monosubstituted quaterphenylenes, one para-substituent is hydrogen**

| | 4-methoxy- tetraphenylene | 4-chloro- tetraphenylene | 4- dimethylamino- tetraphenylene | 4-cyanotetra-phenylene |
|---|---|---|---|---|
| polarised fluorescence | yes | yes | yes | yes |
| emission maximum | 397 | 390 | 440 | 417 |
| fiber shape | kinks, branched | straight | bent | straight, kinks, branched |

Frequency doubling and polarized fluorescence was observed for all nanofibers, not for non-nanofiber-structure compounds. In contrast, nanofibers produced from the symmetric unsubstituted quaterphenylene do not show a detectable level of frequency doubling when plotted in the same scale graph.

It is evident that emission maxima determined for nanofiber structures significantly differ from the values determined for their constituent compounds without nanofiber-structure. This discrepancy demonstrates that the optical properties of nanofibers from nonsymmentrically substituted quaterphenylenes cannot be derived from the properties of the individual compounds. In detail, the nonlinear optical properties of the nanofibers of the invention, e.g. their luminescence and frequency doubling properties could not be expected from analyses of their constituent isolated compounds.

Emission of second harmonic (SH) signals was measured using nanofibers located on the mica substrate or after removal of nanofibers from mica by excitation with femtosecond near infrared laser pulses (100 fs) at 790 nm. SHG intensities were measured as a function of the excitation light's polarisation angle with respect to the fixed transition dipole moment vector of an array of nanofibers, e.g. on the mica substrate. Generally, a sin² course was found with damping due to bleaching. The polarisation ratio of (Iₘₐₓ-Iₘᵢₙ)/(Iₘₐₓ+Iₘᵢₙ) was 0.95 ± 0.05, indicating a high degree of crystallinity of the nanofibers.

Irradiation with femtosecond IR pulses resulted in the observation of a strong SH peak, proving true second harmonic generation from the bulk of the nanofiber. Signal shifts were observed for shifts of the excitation wavelength.

For nanofibers made from different compounds according to the invention, intensity of SH signals have been found to differ by factors of 80, e.g. for 4-cyanotetraphenylene nanofibers compared to the other nanofibers of Table 1. For intensities of SH signals, the following order could be found for nanofibers of:
1-cyano-4,1':4',1":4",1"'-quaterphenylene>> 1-dimethylamino-4,1':4',1":4",1"'-quaterphenylene > 1-methoxy-4,1':4',l":4",l"'-quaterphenylene > 1-chloro-4,1':4',1":4",1'"-quaterphenylene, with minor differences in SH signal intensities between the latter three.

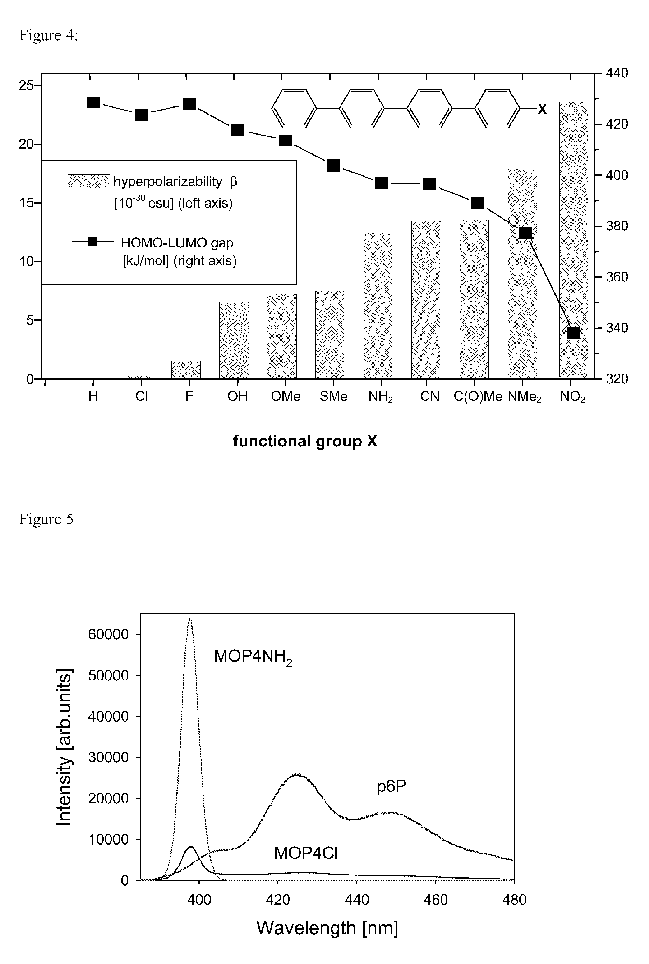

A graphic comparison of β-values calculated for the compounds, i.e. without nanofiber-structure, to nanofibers composed of the compounds, is shown in Figure 4. Comparison of the data presented in the plot of Figure 4 with the experimental findings obtained with the nanofibers clearly shows that a correlation between β-values for isolated molecules and the hyperpolarizability (HOMO-LUMO gap) of nanofibers produced from the compounds does not exist because intermolecular interactions between the molecular building blocks within the aggregate do have a marked influence on these properties. The compounds are indicated in the inset structural formula in combination with the mono-substituent X given in the lower axis.

### Example 2: Synthesis of nonsymmetrically disubstituted quaterphenylenes

As examples for non-symmetrically substituted quaterphenylenes having substituents other than hydrogen in both *para*-positions, 1-chloro-4"'-methoxy-4,1':4',1":4",1"'-quaterphenylene, 1-amino-4'"-methoxy-4,1':4',1":4",1"'-quaterphenylene, 1-cyano-4"'-methoxy-4,1':4',1":4",1"'-quaterphenylene, and 1-methoxy-4"'-nitro-4,1':4',1":4",1'"-quaterphenylene were synthesized.

### Reaction No. 8:

For the synthesis of 1-chloro-4'''-methoxy-4,1':4',1":4",1"-quaterphenylene 1.0 mmol of 4-bromo-4"-methoxy-1,1':4,1"-terphenylene, 1.2 mmol (1.2 equivalents) of 4-chlorophenylboronic acid, 0.05 mmol (3 equivalents) of caesium fluoride, and 0.05 mmol (5 mol-%) of tetrakis(triphenylphosphino)palladium(0) were put in a 100 mL 2-neck-flask, equipped with a reflux condenser, dissolved in 60 mL of abs. tetrahydrofurane under an argon atmosphere, and refluxed for 50 h. The precipitate was collected by filtration. Yield: 92 %,¹H-NMR (CDCl₃, δ, ppm): 3.8 (3 H, s), 7.01 (2 H, d, *J*= 7.9), 7.43 (2 H, d, *J*= 7.8), 7.56-7.61 (4 H, m), 7.65 (4 H, d, *J* = 7.8), 7.68-7.73 (4 H, m).

### Reaction No. 9:

For the synthesis of 1-amino-4"'-methoxy-4,1':4',1":4",1"'-quaterphenylene, reaction No. 7 was performed but replacing 4-chlorophenylboronic acid with *tert*.-butyl-4-(4,4,5,5-tetramethyl-1,3,2-dioxaborolane-2-yl)phenylcarbamate. The BOC-protected crude product was washed with tetrahydrofurane and water to give the desired product as a light yellow amorphous solid in 93 % yield. ¹H-NMR (CDCl₃, δ, ppm): 1.5 (9 H, s), 3.85 (3 H, s), 6.5 (1 H, broad s), 7.0 (2 H, d, *J* = 8.4), 7.4-7.7 (4 H, broad m).

The BOC-protected product was suspended in dichloromethane, then 6 mL of trifluoroacetic acid were added dropwise at 0 °C, followed by stirring of the solution for 12 h at room temperature. Dropwise addition of 8 mL of 2 M aqueous sodium hydroxide lead to precipitation of the desired product, which was collected by filtration and washed with tetrahydrofurane, ethyl acetate, and water to give a yellow amorphous solid. Yield: Quantitative. ¹H-NMR (CDCl₃, small amount trifluoroacetic acid, δ, ppm): 4.0 (3 H, s), 7.1 (2 H, d, *J* = 8.4), 7.4 (2 H, d, *J* = 8.4), 7.64-7.82 (12 H, broad m).

### Reaction No. 10:

For the synthesis of 1-cyano-4"'-methoxy-4,1':4',1":4",1"'-quaterphenylene, reaction No. 7 was performed but replacing 4-chlorophenyl boronic acid with 4-cyanophenylboronic acid. The crude product was washed with tetrahydrofurane and water to give a light grey amorphous solid. Yield: 95 %. ¹H-NMR (CDCl₃, δ, ppm): 3.8 (3 H, s), 7.00 (2 H, d, *J* = 8.8), 7.58 (2 H, d, *J* = 8.8), 7.63-7.71 (6 H, m), 7.73-7.77 (6 H, m).

### Reaction No. 11:

For the synthesis of 4-methoxy-4'"-nitro-1,1':4',1'':4'',1'"-quaterphenylene, reaction No. 7 was performed but replacing 4-chlorophenylboronic acid with 4-nitrophenyl boronic acid. The crude product was washed with tetrahydrofurane and water to give a yellow amorphous solid. Yield: 76 %. ¹H-NMR (CDCl₃, δ, ppm): 3.8 (3 H, s), 6.98 (2 H, d, J= 8.5), 7.48 (4 H, d, J= 8.5), 7.56 (4 H, d, J= 8.5), 7.60-7.62 (4 H, m), 8.31 (2 H, d, J= 8.8).

**Table 2: Optical properties of nanofibers from nonsymmetrically disubstituted quaterphenylenes, one para-substituent is a methoxy group**

| | 1-amino-4'" - methoxy- 4,1':4',1":4",1'" - quaterphenylene | 1-chloro-4'" - methoxy- 4,1':4',1":4",1"'- quaterphenylene | 1-cyano-4"'-methoxy-4,1':4',1":4",1"'-quaterphenylene |
|---|---|---|---|
| polarised fluorescence | - | yes | yes |
| emission maximum | 438 | 428 | 433 |
| fiber shape | rounded | rounded | rounded |

As for the compounds of Example 1, frequency doubling and polarized fluorescence was observed for most nanofibers, not for non-nanofiber-structure compounds. The fluorescence ofnanofibers consisting of 1-amino-4"'-methoxy-4,1':4',1":4",1"'-quaterphenylene was found to be 100-times weaker compared to the other examples, thus being nonfluorescent in a fluorescence microscope. Again, it can be shown that emission maxima determined for nanofiber structures significantly differ from the values determined for their constituent compounds without nanofiber-structure. This discrepancy demonstrates that the optical properties of nanofibers from non-symmetrically substituted quaterphenylenes cannot be derived from the properties of the compounds. Especially the non-linear optical properties of the nanofibers of the invention, e.g. their luminescence and frequency doubling properties are characteristic for the nanofiber structure, which in turn is dependent on the non-symmetric substitution of the quaterphenylene core.

Emission of second harmonic (SH) signals and SHG intensities were measured as described for Example 1.

### Example 3: Synthesis of substituted terphenylenes

As examples for substituted terphenylenes prepared as synthons for the synthesis of higher oligophenylenes for the first time according to the invention, asymmetrically substituted terphenylenes were synthesized, namely 1-bromo-4"-methoxy-4,1':4',1"-terphenylene, 1-(2,5-dimethyl-1*H*-pyrrole)-4"-nitro-4,1':4',1"-terphenylene, 1-iodo-4"-nitro-4,1':4',1"-terphenylene and 1-bromo-4"-nitro-4,1:4',1"-terphenylene.

### Reaction No. 12:

For the synthesis of 1-bromo-4"-methoxy-4,1':4',1"-terphenylene 2.25 mmol of 4-iodo-4'-methoxy-biphenyl, 2.4 mmol (1.1 equivalents) of 4-bromophenylboronic acid, 5.6 mmol (2.5 equivalents) of caesium fluoride, and 0.067 mmol (3 mol-%) of tetrakis(triphenylphosphino)-palladium(0) were put into a 100 mL 2-neck-flask equipped with a reflux condenser, dissolved in 60 mL of abs. tetrahydrofurane under an argon atmosphere, and refluxed for 30 h. The crude product was washed with tetrahydrofurane and water to give the product as a white amorphous solid in 84 % yield. ¹H-NMR (CDCl₃, δ, ppm): 3.85 (3 H, s), 6.99 (2 H, d, *J* = 8.6), 7.48 (2 H, d, *J* = 8.4), 7.56 (4 H, d, *J* = 7.9), 7.59 (2 H, d, *J* = 8.3), 7.62 (2 H, d, *J=* 8.4).

### Reaction No. 13:

For the synthesis of 1-(2,5-dimethyl-1*H*-pyrrole)-4"-nitro-4,1':4',1"-terphenylene 1.9 mmol of 4-bromo-4'-(2,5-dimethyl-1H-1yl)-biphenyl, 2.0 mmol (1.01 equivalents) of 4-nitrophenyl-boronic acid, 4.75 mmol (2.5 equivalents) of caesium fluoride, and 0.057 mmol (3 mol-%) of tetrakis(triphenylphosphino)palladium(0) were put in a 100 mL 2-neck-flask equipped with a reflux condenser, dissolved in 50 mL abs. tetrahydrofurane under an argon atmosphere, and refluxed for 30 h. The crude product was flash-chromatographed (*n*-hexane/ethyl acetate/dichloromethane 10:5:1 containing 5 % of triethylamine) to give the desired product as a brown amorphous solid. Yield 46 %.¹H-NMR (CDCl₃, δ, ppm): 2.09 (6 H, s), 5.93 (2 H, s), 7.31 (2 H, d, J = 8.2), 7.72 (2 H, d, J = 8.2), 7.75 (2 H, d, J = 6.9), 7.80 (2 H, d, J = 8.8), 8.32 (2 H, d, *J*= 8.7)

### Reaction No. 14:

For the synthesis of 1-iodo-4"-nitro-4,1':4',1"-terphenylene, 0.87 mmol of 1-(2,5-dimethyl-1*H*-pyrrole)-4"-nitro-4,1:4'-1"-terphenylene were dissolved in a mixture of 20 mL of 2 N sulphuric acid and 20 mL of acetonitrile and cooled to -5 °C using a mixture of ice and sodium chloride as coolant. At this temperature, 2.6 mmol (3 equivalents) of sodium nitrite in 10 mL of water were added dropwise. After stirring for 30 min, 4.4 mmol (5 equivalents) of potassium iodide dissolved in 5 mL of water were added dropwise at -5 °C. After removing of the cooling bath, the reaction mixture was stirred for 1 h, then heated to 60 °C for 1 h, and finally stirred at room temperature for 8 h. The reaction mixture was neutralized with a saturated aqueous solution of sodium carbonate and the water layer was extracted with dichloromethane. The combined organic layers were washed with water, a sodium thiosulphate solution, and again water, dried over sodium sulphate, and concentrated. The crude product was purified by flash-chromatography using a solvent gradient (*n*-hexane/ethyl acetate 5:1; dichloromethane/n-hexane 5:1 containing 5 % of triethylamine) to give the desired product as a yellow amorphous solid. Yield 20 %.¹H-NMR (CDCl₃, δ, ppm): 7.50 (2 H, d, J= 8.5), 7.59 (2 H, d, J= 8.5) 7.68 - 7.72 (4 H, m), 7.77 (2 H, d, J= 8.5), 8.31 (2 H, d, J = 8.5).

### Reaction No. 15:

For the synthesis of 1-bromo-4"-nitro-4,1:4',1"-terphenylene 0.74 mmol 4-iodo-4'-nitrobiphenyle, 0.76 mmol (1.02 equivalents) of 4-bromophenylboronic acid, 2.22 mmol (3.0 equivalents) of caesium fluoride, and 0.037 mmol (5 mol-%) of tetrakis(triphenylphosphino)-palladium(0) were put in a 100 mL 2-neck-flask equipped with a reflux condenser, dissolved in 50 mL of abs. tetrahydrofurane under an argon atmosphere, and refluxed for 30 h. The organic phase was diluted with 50 mL of dichloromethane, washed with water, dried over sodium sulphate, and concentrated. The crude product was purified by flash-chromatography (*n*-hexane/ethyl acetate/dichloromethane 10:5:1 containing 5 % of triethylamine) to give the desired product as an amorphous yellow solid. Yield 42 %.¹H-NMR (CDCl₃, δ, ppm): 7.50 (2 H, d, J= 8.5), 7.59 (2 H, d, J= 8.5), 7.68-7.72 (4 H, m), 7.77 (2 H, d, J= 8.5), 8.31 (2 H, d, J = 8.5).

### Example 4: Production of nanofibers

Using compounds according to the invention, e.g. obtainable in the above examples, nanofibers according to the invention were generated by vacuum deposition onto a substrate surface of freshly cleaved muscovite mica. The substrate temperature was precisely controlled to be constant during growth and can be adjusted to between 0 and 150 °C, preferably 20 to 100 °C, e.g. 60 °C. For sublimation of compounds, the temperature was chosen between 200 and 400 °C, depending on the compound to obtain macroscopically desired dimensions. For comparative purposes, the deposition was done at a substrate temperature of 56 °C. For vacuum deposition, a pressure of 10⁻⁴-10⁻⁶ Pa was used.

From these examples, a skilled person can adapt procedures for the synthesis of further non-symmetrically substituted oligophenylenes and the production of nanofibers thereof.

### Example 5: Frequency doubling by nanofibers

As representatives of the nanofibers of the invention, nanofibers formed of the non-symmetrically di-functionalized quaterphenylenes 1-amino-4'''-methoxy-4,1':4'1":4",1"'-quaterphenylene and 1-chloro-4"'-methoxy-4,1':4',1":4",1"'-quaterphenylene, respectively, were irradiated with an IR femtosecond laser pulse of 790 nm, 100 fs.

The measurement results of Figure 5 show that the emission was at 395 nm, half of the incident wavelength corresponding to doubled frequency. This SHG signal at 395 nm was shown for both nanofibers, their peak height, i.e. the SHG intensity, being dependent on the constituent non-symmetrically substituted quaterphenylene compound. The comparative nanofiber consisting of hexaphenylene displays the same behaviour as non-substituted quaterphenylene (not shown) with surface effects only but not emitting an SHG signal. The focus of emission by nanofibers according to the invention onto the SHG response peak of double the frequency of incident irradiation demonstrates that this non-linear optical behaviour is dependent on the nanofiber, e.g. its bulk, and not on surface effects.

At present, the frequency doubling effect, detectable as the SHG signal, is assumed to be based on a non-centrosymmetrical arrangement of the molecules within the nanofiber, which arrangement is in turn caused by the molecules being non-centrosymmetrical. Further, it could be observed, that the nanofibers according to the invention are non-centrosymmetrical, e.g. have non-centrosymmetrical cross-sections.

In Figure 5, the emission of the Second Harmonic signal from the bulk of the nanofibers is shown with nanofibers of 1-chloro-4"'-methoxy-4,1':4',1":4",1"'-quaterphenylene representing the nanofibers of the invention. The fluorescence spectrum after UV excitation (cw HeCd Laser, 325 nm) is shown for comparison. The excitation wavelengths irradiated onto the nanofibers are indicated next to the respective SHG signal response peaks, i.e. at 830 nm excitation, the emission peak was at 415 nm, at 790 nm excitation, the emission was at 395 nm, and at 770 nm excitation, the emission was at 385 nm. These results show for each emission peak half the wavelength, i.e. double the frequency, of the incident excitation light, i.e. an SHG signal over a range of excitation wavelengths.

## Claims

1. Nanofiber obtainable by vacuum deposition ofnonsymmetrical oligophenylene compounds, **characterized by** formula I, wherein the substituents are 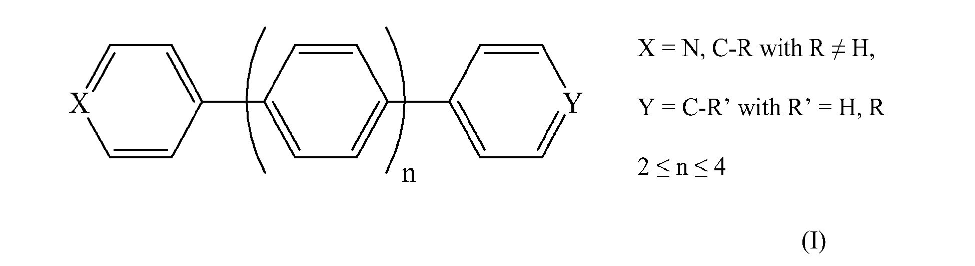 and n is an integer from 2 to 4, preferably 2.

2. Nanofiber according to claim 1, wherein X is C-R and Y is C-H.

3. Nanofiber according to claim 1 or 2, wherein X and/or Y are substituted with a first and/or second substituent, respectively, independently selected from the group comprising alkoxy, especially methoxy and ethoxy, chloro, amino, dialkylamino, especially dimethylamino, diethyl amino, methyl-ethyl amino, hydroxy, pyrrole, cyano, nitro, carboxylic acid, carboxylic alkyl ester, especially methylester or ethylester, pyridine, aldehyde, a keto group, especially methyl-keto or ethyl-keto, fluoro, alkyl-ether, especially methyl-ether or ethyl-ether, thio, thiol, alkyl-thio, specially methyl-thio and ethyl-thio, and/or alkyl.

4. Nanofiber according to claim 3, wherein the first substituent provides differing electronic effects onto the core structure of formula I than the second substituent.

5. Nanofiber according to claim 3 or 4, wherein the electronic effect is an electron pulling effect or an electron pushing effect.

6. Nanofiber according to one of the preceding claims, wherein the core structure is a quaterphenylene compound.

7. Nanofiber according to one of the preceding claims, having a symmetric or asymmetric cross-sectional face.

8. Nanofiber according to claim 7, wherein the cross-sectional face is curved, rectangular, frustum-shaped or triangular.

9. Use of nanofibers according to one of the preceding claims for the production of electro optic devices.

10. Use according to claim 9 as optical barrier in electro optic devices.
